# EUROPEAN PATENT APPLICATION

(11) **EP 4 775 308 A1**
(43) Date of publication of application: **15.07.2026**
(21) Application number: 24900914.3
(22) Date of filing: 15.11.2024
(51) Int. Cl.: B01L 3/00

(54) **DISPOSABLE CARTRIDGE USED IN LIQUID IN VITRO DIAGNOSTIC EQUIPMENT USING CHEMILUMINESCENCE**

(30) Priority: 06.12.2023 KR 20230175163
(71) Applicant: Boditech Med Inc., Chuncheon-si, Gangwon-do 24398 (KR)
(72) Inventor: HA, Yong Hwang, Chuncheon-si Gangwon-do 24403 (KR); CHO, Chu Hyun, Chuncheon-si Gangwon-do 24209 (KR); OH, Young Jin, Chuncheon-si Gangwon-do 24401 (KR); JUNG, Ji Woon, Chuncheon-si Gangwon-do 24278 (KR); YEO, Kang In, Yeongcheon-si Gyeongsangbuk-do 38837 (KR); YOO, Jin, Chuncheon-si Gangwon-do 24416 (KR)
(74) Representative: Louis Pöhlau Lohrentz
(86) International application number: PCT/KR2024/018054
(87) International publication number: WO 2025/121727

(57) **Abstract**

The present invention relates to a disposable cartridge for use in liquid-phase in vitro diagnostic equipment using chemiluminescence. The cartridge of the present invention includes a cartridge frame having a plurality of wells and a plurality of well connection parts connecting the plurality of wells, and a light-blocking sector formed in at least one of the plurality of well connection parts. The cartridge of the present invention, when used in liquid-phase in vitro diagnostic equipment using chemiluminescence, can block the entry of ambient light into the measurement well. In addition, the cartridge of the present invention can increase measurement sensitivity in liquid-phase in vitro diagnostics using chemiluminescence.

## Description

### TECHNICAL FIELD

The present invention relates to a disposable cartridge for use in liquid-phase in vitro diagnostic equipment using chemiluminescence, and more particularly to a cartridge having a configuration for implementing a dark chamber.

### BACKGROUND ART

In liquid-phase in vitro diagnostic equipment using chemiluminescence, reagents filled in a disposable cartridge are employed. A disposable cartridge used for in vitro diagnostics includes a plurality of wells for filling reagents or for carrying out various reactions, purification, and the like, as well as a cartridge frame. The cartridge frame is made of a plastic material and includes a plurality of well connection parts that connect the wells to one another. The wells include a reagent well, a reaction well, a washing well, a measurement well, a sample well, and other wells. The reagent well is filled with reagents necessary for diagnosis; in the reaction well, a sample and a diagnostic reagent are mixed to proceed with an antigen-antibody complex formation reaction; in the washing well, non-reactive substances are removed from the antigen-antibody complex to purify the target component; and in the measurement well, a luminescent signal is detected using a signal detection device such as a PMT (Photo Multiplier Tube). A sample is introduced into the sample well, and the other wells are used for mounting an analysis tip or for auxiliary or preliminary purposes.

Each well may be manufactured individually and inserted into the cartridge frame, or may be integrally injection-molded with the cartridge frame. The individual wells are not separated from the cartridge frame during use of the cartridge, but are used integrally with the cartridge frame during testing. The individual wells in the cartridge may be arranged in a single row or in two or more rows.

Meanwhile, since chemiluminescent reagents are used at high sensitivity, a PMT is primarily employed as the optical system. The PMT must be used in a darkened environment (dark chamber). In the absence of a dark chamber, background signals entering the system reduce the sensitivity of signal measurement.

In diagnostic equipment that uses a separate assay cup rather than a cartridge, the assay cup is placed in a small enclosed space, and chemiluminescence and signal collection are performed under light-blocked dark chamber conditions. However, in diagnostic equipment that uses a cartridge, it is difficult to place the entire cartridge inside a dark chamber; therefore, it is necessary to implement a dark chamber only for the measurement well where chemiluminescence takes place.

A general translucent cartridge frame made of plastic material has the property of transmitting light. Accordingly, even if the measurement well is surrounded to implement a dark chamber, light enters the measurement well through the cartridge frame, thereby increasing the background signal and reducing measurement sensitivity. In other words, a means for blocking the transmission of light from the surrounding environment into the measurement well is required.

If the entire cartridge frame is manufactured from a black, light-blocking material, the interior of the wells cannot be visually inspected, making it difficult during actual production to verify whether the wells are filled and whether the correct amount has been dispensed, thereby complicating quality control. Furthermore, the optical system must be unconditionally positioned above the measurement well, which limits the selection of the optical system placement. In addition, when measurement is performed from above, there is a higher probability of optical errors such as interference with the injector, refraction due to the irregular shape of the surface of the analyte, and non-uniform distribution of the analyte caused by bubbles.

### SUMMARY OF THE INVENTION

### Technical Problem

Accordingly, it is one object of the present invention to block the entry of ambient light into the measurement well of a disposable cartridge used in liquid-phase in vitro diagnostic equipment using chemiluminescence.

It is another object of the present invention to provide a disposable cartridge capable of increasing measurement sensitivity in liquid-phase in vitro diagnostics using chemiluminescence.

### Technical Solution

The present invention, which is directed to achieving the above-described objects, provides a disposable cartridge for use in liquid-phase in vitro diagnostic equipment using chemiluminescence, the cartridge comprising: a cartridge frame including a plurality of wells and a plurality of well connection parts connecting the plurality of wells; and a light-blocking sector formed in at least one of the plurality of well connection parts.

At least one of the plurality of wells may be a measurement well, and the light-blocking sector may be formed in a well connection part adjacent to the measurement well. Preferably, the measurement well is positioned at a terminal end of the cartridge frame.

The light-blocking sector engages with a dark chamber wall of the diagnostic equipment. Further, the light-blocking sector may include an uneven portion that engages with the dark chamber wall.

The light-blocking sector may be formed of black or colored plastic capable of blocking light transmission. The light-blocking sector may cover an entire vertical cross-section of the well connection part.

### Advantageous Effects

The cartridge of the present invention, when used in liquid-phase in vitro diagnostic equipment using chemiluminescence, can block the entry of ambient light into the measurement well. In addition, the cartridge of the present invention can increase measurement sensitivity in liquid-phase in vitro diagnostics using chemiluminescence.

### BRIEF DESCRIPTION OF THE DRAWINGS

FIG. 1 is a structural diagram of a cartridge according to one embodiment of the present invention.
FIG. 2 is a structural diagram of a cartridge according to another embodiment of the present invention.
FIG. 3 is a structural diagram of a cartridge according to still another embodiment of the present invention.
FIG. 4A illustrates the entry of light into the measurement well in a conventional cartridge, and FIG. 4B illustrates the blocking of light to the measurement well in the cartridge shown in FIG. 1.
FIG. 5A illustrates a state before the dark chamber walls of the diagnostic equipment form a dark chamber with respect to the cartridge shown in FIG. 1, and FIG. 5B illustrates a state after the dark chamber is formed.
FIG. 6A illustrates a state before the dark chamber walls of the diagnostic equipment form a dark chamber with respect to the cartridge shown in FIG. 2, and FIG. 6B illustrates a state after the dark chamber is formed.
FIG. 7 illustrates the cartridge and dark chamber walls of a diagnostic equipment according to still another embodiment of the present invention.
FIG. 8 illustrates the cartridge and dark chamber walls of a diagnostic equipment according to still another embodiment of the present invention.
FIG. 9 is a plan view of a cartridge according to still another embodiment of the present invention.
FIG. 10 is a plan view of a cartridge according to still another embodiment of the present invention.
FIG. 11 is a plan view of a cartridge according to still another embodiment of the present invention.
FIG. 12 illustrates the detailed configuration of the light-blocking sector in the cartridge shown in FIG. 1.

### DETAILED DESCRIPTION OF PREFERRED EMBODIMENTS

Preferred embodiments of the present invention will be described with reference to the accompanying drawings in order to provide a thorough understanding of the present invention. The embodiments of the present invention may be modified in various forms, and the scope of the present invention should not be construed as being limited to the embodiments described in detail below. These embodiments are provided to more completely explain the present invention to those of ordinary skill in the art. Accordingly, the shapes and the like of elements in the drawings may be exaggerated to emphasize a clearer explanation. It should be noted that the same members in each drawing may be denoted by the same reference numerals. Detailed descriptions of well-known functions and configurations that may unnecessarily obscure the subject matter of the present invention are omitted.

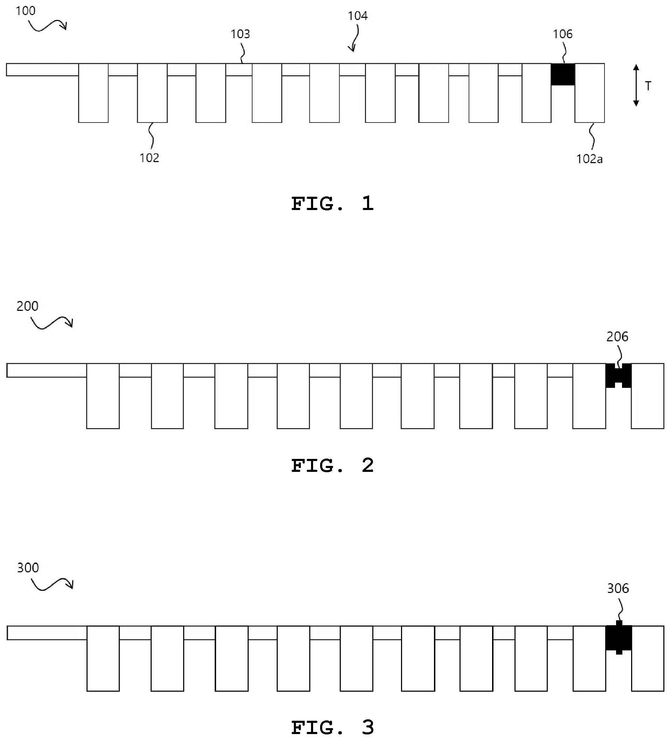

FIG. 1 is a structural diagram of a disposable cartridge 100 for use in liquid-phase in vitro diagnostic equipment using chemiluminescence according to one embodiment of the present invention. As shown, the cartridge 100 includes a plurality of wells 102, a cartridge frame 104, and a light-blocking sector 106. The cartridge frame 104 includes a plurality of well connection parts 103 connecting the plurality of wells 102. The light-blocking sector 106 is formed in at least one of the plurality of well connection parts 103.

At least one of the plurality of wells 102 is a measurement well 102a. The measurement well 102a may be positioned at a terminal end of the cartridge frame 104 as shown in FIG. 1. The light-blocking sector 106 is preferably formed in the well connection part adjacent to the measurement well 102a. The light-blocking sector 106 may be formed of black or colored plastic capable of blocking light transmission. In addition, the light-blocking sector 106 is formed so as to cover the entire vertical cross-section of the well connection part 103 in the thickness direction (T).

The cartridge 100 may be manufactured by applying a double injection molding method when molding the cartridge frame 104 so as to simultaneously inject a light-blocking material around the measurement well 102a, or by separately manufacturing the cartridge frame 104, the light-blocking sector 106, and the measurement well 102a and then fusing them together.

FIG. 2 is a structural diagram of a cartridge 200 according to another embodiment of the present invention. A light-blocking sector 206 provided in the cartridge 200 has concave portions formed on its upper and lower surfaces that engage with the dark chamber walls of the diagnostic equipment. FIG. 3 is a structural diagram of a cartridge 300 according to still another embodiment of the present invention. A light-blocking sector 306 provided in the cartridge 300 has convex portions formed on its upper and lower surfaces that engage with the dark chamber walls of the diagnostic equipment. The uneven portions (concave or convex portions) on the upper and lower surfaces of the light-blocking sectors 206, 306 enhance the light-blocking effect when the leading ends of the engaging dark chamber walls of the diagnostic equipment have correspondingly shaped configurations.

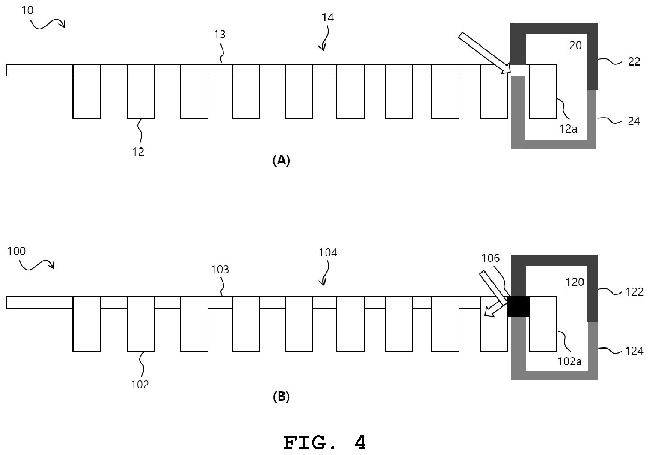

FIG. 4A illustrates the entry of light into the measurement well in a conventional cartridge 10, and FIG. 4B illustrates the blocking of light to the measurement well in the cartridge 100 shown in FIG. 1.

The cartridge 10 includes a plurality of wells 12 and a cartridge frame 14. The cartridge frame 14 includes well connection parts 13 connecting the wells. Even when the dark chamber walls 22, 24 of the diagnostic equipment form a dark chamber 20 around the measurement well 12a of the cartridge 10, light enters through the cartridge frame 14 since the cartridge frame 14 is typically made of a translucent plastic material.

In the cartridge 100, by contrast, when the dark chamber walls 122, 124 of the diagnostic equipment form a dark chamber 120 around the measurement well 102a, the light-blocking sector 106 blocks the light transmitted through the cartridge frame 104, thereby preventing light from entering the dark chamber 120.

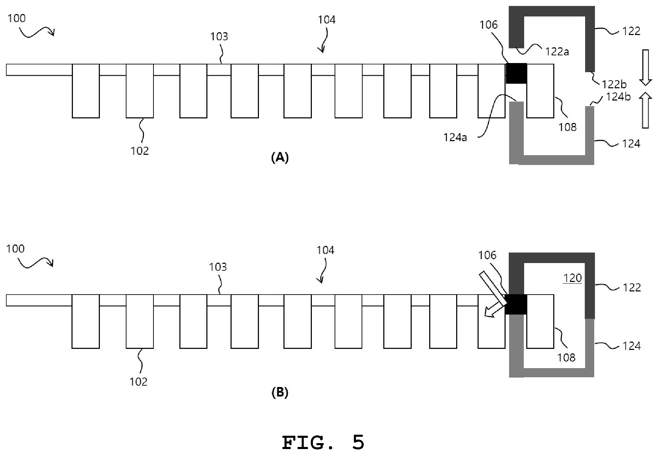

FIG. 5A illustrates a state before the dark chamber walls 122, 124 of the diagnostic equipment form a dark chamber with respect to the cartridge 100 shown in FIG. 1, and FIG. 5B illustrates a state after the dark chamber 120 is formed. One end 122a of the dark chamber wall 122 has a shape corresponding to the upper surface of the light-blocking sector 106, and one end 124a of the dark chamber wall 124 has a shape corresponding to the lower surface of the light-blocking sector 106, thereby preventing the entry of light at the boundaries. In addition, the other end 122b of the dark chamber wall 122 and the other end 124b of the dark chamber wall 124 have correspondingly shaped configurations, thereby preventing the entry of light at those boundaries. To enhance the light-blocking effect, the boundaries between the dark chamber walls 122, 124 and the light-blocking sector 106 may be tightly fitted or engaged and may include an elastic member (not shown).

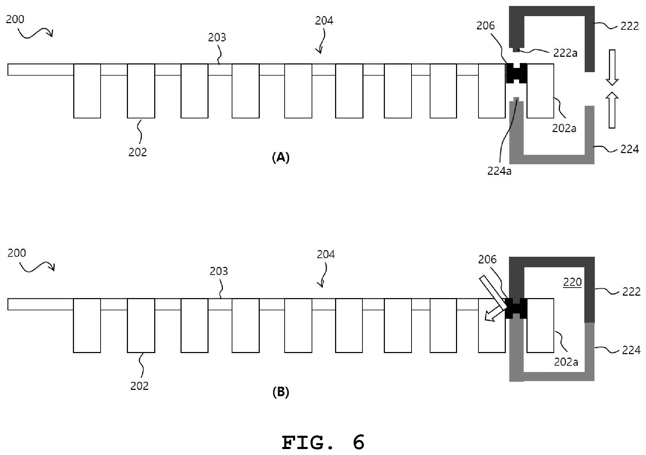

FIG. 6A illustrates a state before the dark chamber walls 222, 224 of the diagnostic equipment form a dark chamber with respect to the cartridge 200 shown in FIG. 2, and FIG. 6B illustrates a state after the dark chamber 220 is formed.

The cartridge 200 includes a plurality of wells 202, a cartridge frame 204, and a light-blocking sector 206. The cartridge frame 204 includes well connection parts 203 connecting the wells. To enhance the light-blocking effect, the light-blocking sector 206 has concave portions on its upper and lower surfaces, and convex portions are formed at one ends 222a, 224a of the dark chamber walls 222, 224. The dark chamber wall 222 descends and the dark chamber wall 224 ascends with the light-blocking sector 206 therebetween and engage with each other, thereby forming the dark chamber 220 around the measurement well 202a.

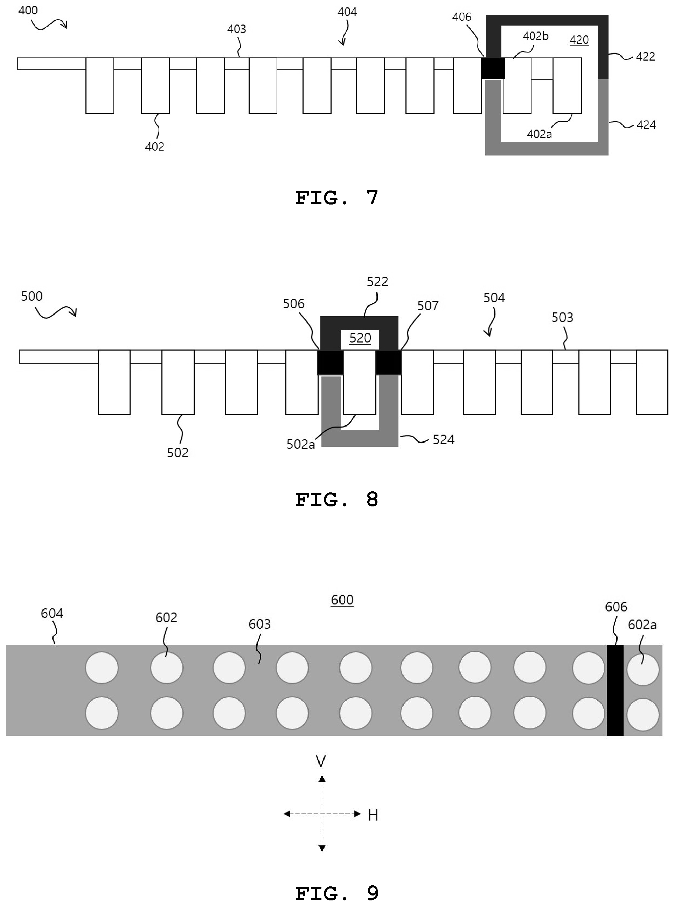

FIG. 7 illustrates a cartridge 400 and dark chamber walls 422, 424 of a diagnostic equipment according to still another embodiment of the present invention.

The cartridge 400 includes a plurality of wells 402, a cartridge frame 404, and a light-blocking sector 406. The cartridge frame 404 includes well connection parts 403 connecting the wells. The measurement well 402a is installed at a terminal end of the cartridge 400, and the cartridge 400 includes the light-blocking sector 406 not in the well connection part directly adjacent to the measurement well 402a, but in the well connection part adjacent to the adjacent well 402b. The dark chamber walls 422, 424 of the diagnostic equipment, together with the light-blocking sector 406, form a dark chamber 420 around both the measurement well 402a and the well 402b. As in the cartridge 400, embodiments of the present invention may configure the light-blocking sector and the dark chamber walls so as to surround two or more wells including the measurement well.

While it is effective to insert the light-blocking sector into the well connection part directly adjacent to the measurement well 402a, the light-blocking sector is not limited to the directly adjacent well connection part, and may be configured to include a non-directly-adjacent well connection part and an adjacent well in the vicinity of the measurement well. That is, the light-blocking sector may be configured to include two or more adjacent wells including the measurement well, or well connection parts thereof.

FIG. 8 illustrates a cartridge 500 and dark chamber walls 522, 524 of a diagnostic equipment according to still another embodiment of the present invention.

The cartridge 500 includes a plurality of wells 502, a cartridge frame 504, and light-blocking sectors 506, 507. The cartridge frame 504 includes well connection parts 503 connecting the wells. The measurement well 502a is installed not at a terminal end of the cartridge 500 but at a central portion thereof, and the cartridge 500 includes the light-blocking sectors 506, 507 respectively in the well connection parts directly adjacent to the measurement well 502a on the right and left sides. The dark chamber walls 522, 524 of the diagnostic equipment, together with the light-blocking sectors 506, 507, form a dark chamber 520 around the measurement well 502a. As in the cartridge 500, when the measurement well 502a is installed at a position other than the terminal end of the cartridge 500, the light-blocking sectors 506, 507 must be provided on the right and left sides of the measurement well 502a, respectively, to form a dark chamber surrounding the measurement well 502a.

FIG. 9 is a plan view of a cartridge 600 according to still another embodiment of the present invention. As shown, the cartridge 600 has wells 602 installed in a two-row configuration, and the measurement well 602a is installed at a terminal end of the cartridge 600.

The cartridge frame 604 has well connection parts 603 extending in both the horizontal direction (H) and the vertical direction (V) to connect the wells. To form a dark chamber around the measurement well 602a, the cartridge 600 includes a light-blocking sector 606 that traverses the cartridge frame 604 in the horizontal direction (H). The dark chamber walls (not shown) of the diagnostic equipment are configured to form a dark chamber around the measurement well 602a together with the light-blocking sector 606.

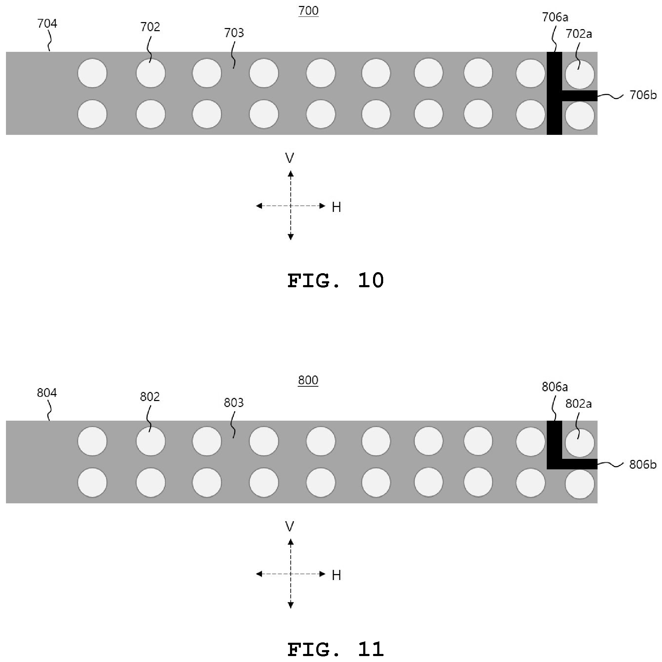

FIG. 10 is a plan view of a cartridge 700 according to still another embodiment of the present invention. As shown, the cartridge 700 has wells 702 installed in a two-row configuration, and the measurement well 702a is installed at a terminal end of the cartridge 700.

The cartridge frame 704 has well connection parts 703 extending in both the horizontal direction (H) and the vertical direction (V) to connect the wells. To form a dark chamber around the measurement well 702a, the cartridge 700 includes: a light-blocking sector 706a that traverses the cartridge frame 704 in the vertical direction (V) on the left side of the measurement well 702a; and a light-blocking sector 706b formed in the horizontal direction (H) in the well connection part adjacent below the measurement well 702a. One end of the light-blocking sector 706b extends to the right terminal end of the cartridge frame 704, and the other end intersects with the light-blocking sector 706a. The dark chamber walls (not shown) of the diagnostic equipment are configured to form a dark chamber around the measurement well 702a together with the light-blocking sectors 706a, 706b.

FIG. 11 is a plan view of a cartridge 800 according to still another embodiment of the present invention. As shown, the cartridge 800 has wells 802 installed in a two-row configuration, and the measurement well 802a is installed at a terminal end of the cartridge 800.

The cartridge frame 804 has well connection parts 803 extending in both the horizontal direction (H) and the vertical direction (V) to connect the wells. To form a dark chamber around the measurement well 802a, the cartridge 800 includes: a light-blocking sector 806a formed in the vertical direction (V) in the well connection part adjacent to the left side of the measurement well 802a; and a light-blocking sector 806b formed in the horizontal direction (H) in the well connection part adjacent below the measurement well 802a. The light-blocking sector 806a intersects with the light-blocking sector 806b. The dark chamber walls (not shown) of the diagnostic equipment are configured to form a dark chamber around the measurement well 802a together with the light-blocking sectors 806a, 806b.

FIGS. 9 to 11 illustrate embodiments in which the wells are installed in a two-row configuration in the cartridge. It will be clearly understood by those of ordinary skill in the art that the present invention is equally applicable to cases in which three or more rows of wells are installed in the cartridge, and to cases in which the measurement well is installed at a position other than the terminal end of the cartridge.

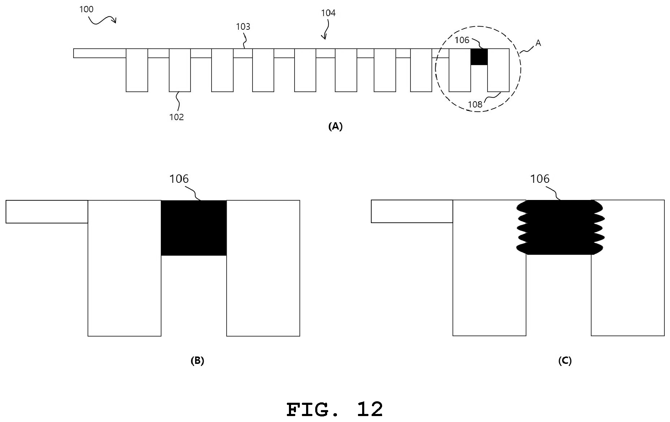

In FIG. 12, FIG. 12A illustrates the overall configuration of the cartridge 100 shown in FIG. 1, and FIGS. 12B and 12C illustrate the detailed configuration of part A of the cartridge 100. When manufacturing the cartridge 100 through double injection molding, the boundary between the light-blocking sector material and the remaining cartridge material may produce a clear boundary line as shown in FIG. 12B, or an unclear boundary line as shown in FIG. 12C, depending on the injection method, both of which are valid. In addition, the light-blocking sector material may be partially introduced into the adjacent wells beyond the well connection parts during manufacturing.

The embodiments of the present invention described above are merely illustrative, and those of ordinary skill in the art to which the present invention pertains will appreciate that various modifications and equivalent other embodiments are possible therefrom. Therefore, it will be well understood that the present invention is not limited only to the forms mentioned in the detailed description above. Accordingly, the true technical scope of protection of the present invention should be determined by the technical spirit of the appended claims. In addition, the present invention should be understood to include all modifications, equivalents, and substitutes within the spirit and scope of the present invention as defined by the appended claims.

## Claims

1. A disposable cartridge for use in liquid-phase in vitro diagnostic equipment using chemiluminescence, the cartridge comprising:
a cartridge frame including a plurality of wells and a plurality of well connection parts connecting the plurality of wells; and
a light-blocking sector formed in at least one of the plurality of well connection parts.

2. The cartridge of claim 1, wherein at least one of the plurality of wells is a measurement well, and the light-blocking sector is formed in a well connection part adjacent to the measurement well.

3. The cartridge of claim 2, wherein the measurement well is positioned at a terminal end of the cartridge frame.

4. The cartridge of claim 1, wherein the light-blocking sector engages with a dark chamber wall of the diagnostic equipment.

5. The cartridge of claim 4, wherein the light-blocking sector includes an uneven portion that engages with the dark chamber wall.
